# EUROPÄISCHE PATENTSCHRIFT

(11) **EP 3 478 475 B1**
(45) Veröffentlichungstag und Bekanntmachung des Hinweises auf die Patenterteilung: **05.05.2021**
(21) Anmeldenummer: 17734334.0
(22) Anmeldetag: 30.06.2017
(51) Int. Cl.: B29C 49/42, B29C 49/06, B29C 49/12, B29C 49/36, B29C 49/64, B29K 67/00, B29K 23/00, B29L 31/00

(54) **DORNENKETTE MIT MAGNETHALTERUNG**
MANDREL CHAIN WITH MAGNETIC RETENTION
CHAÎNE À MANDRINS PRÉSENTANT UNE FIXATION MAGNÉTIQUE

(30) Priorität: 01.07.2016 DE 102016112131
(43) Veröffentlichungstag der Anmeldung: 08.05.2019
(73) Patentinhaber: KHS Corpoplast GmbH, 22145 Hamburg (DE)
(72) Erfinder: JENZEN, Dieter, 25436 Tornesch (DE); MEYER, Jan Fabian, 22337 Hamburg (DE); LINKE, Michael, 22159 Hamburg (DE); KLATT, Dieter, 22147 Hamburg (DE)
(74) Vertreter: Eisenführ Speiser
(86) Internationale Anmeldenummer: PCT/EP2017/066348
(87) Internationale Veröffentlichungsnummer: WO 2018/002337

(56) Entgegenhaltungen:
- DE-A1- 3 639 271
- DE-A1-102008 030 863
- US-A1- 2014 044 597
- US-A1- 2014 161 924
- US-A1- 2015 083 364
- US-B2- 8 360 492

## Beschreibung

### Hintergrund

Die Erfindung betrifft ein Transportsystem zum Transport von Vorformlingen in einer Vorrichtung zur blasformenden Herstellung von Fertigbehältern, wobei das Transportsystem eine Transportkette umfasst, deren Kettenglieder ein Tragelement und ein Transportelement umfassen. Darüber hinaus betrifft die Erfindung eine Vorrichtung zur blasformenden Herstellung von Fertigbehältern aus Vorformlingen, sowie eine Verwendung des Transportsystems und ein Verfahren zum Auswechseln von mindestens einem Tragelement des Transportsystems.

Zum Verpacken von flüssigen Lebensmitteln und Getränken werden in der Regel Behälter, wie z.B. Flaschen aus Glas oder Kunststoff, verwendet, die in einem Herstellungsprozess an verschiedenen Vorrichtungen erstellt und anschließend an einer weiteren Vorrichtung befüllt werden. Beispielhaft sei hier das Herstellen von Behältern aus Kunststoff in einer Blasvorrichtung genannt. Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird und gegebenenfalls einer zusätzlichen Streckung. Der verfahrenstechnische Ablauf bei einer derartigen Expansion des Vorformlings wird zum Beispiel in der DE-OS 43 40 291 erläutert. Die Einleitung des unter Druck stehenden Gases umfasst auch die Druckgaseinleitung in die sich entwickelnde Behälterblase sowie die Druckgaseinleitung in den Vorformling zu Beginn des Blasvorganges. Es sind auch andere Fluide zur Blasformung bekannt, insbesondere auch die Verwendung des in den Fertigbehälter abzufüllenden Füllgutes als Blasfluid.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Während der Herstellungs- und Füllprozesse ist es notwendig, die Behälter zu transportieren und zwischen den einzelnen Prozessstufen von einer Station an die andere zu übergeben. Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine beispielhafte Vorrichtung mit Tragelementen zum Transport der Vorformlinge und Behälter ist aus der EP 2 753 465 A1 bekannt. Die dortige Vorrichtung zur Blasformung von Fertigbehältern weist eine Heizstrecke zur Erwärmung von Vorformlingen aus einem thermoplastischen Material mit mehreren entlang der Heizstrecke angeordneten Heizeinrichtungen auf und ist mit einer Blaseinrichtung als Umformeinrichtung versehen. Die Blaseinrichtung weist mehrere auf einem rotierbaren Blasrad angeordnete Blasstationen zur Umformung der Vorformlinge in die Fertigbehälter auf, sowie Haltevorrichtungen zum Halten und zum Transport der Vorformlinge. Die in der EP 2 753 465 A1 gezeigten Haltevorrichtungen weisen im Bereich ihres in einen Mündungsabschnitt des Vorformlings einführbaren Kopfes mehrere, nämlich mindestens zwei positionierbare Klemmelemente auf, die mindestens bereichsweise gerundet ausgebildet sind und die entlang eines Außenumfanges des Kopfes relativ zueinander mit einem Abstand angeordnet sind, die also umfangsbeabstandet zueinander angeordnet sind. Mindestens eines der Klemmelemente ist in einer bezüglich einer Längsachse der Haltevorrichtung seitlich am Kopf angeordneten Vertiefung positioniert, wobei die Vertiefung schräg zur Längsachse verlaufende obere und untere Gleitflächen zur Beaufschlagung des Klemmelementes aufweist und wobei der Kopf ein mit der unteren Gleitfläche versehenes Kopfunterteil und ein mit der oberen Gleitfläche versehenes Kopfoberteil aufweist. Diese geschilderten Details der Ausbildung der Klemmelemente und der Haltevorrichtung können optional und mit den in der EP 2 753 465 A1 angegebenen Vorteilen auch bei der nachfolgend erläuterten Erfindung vorgesehen sein. Der Vorformling ist dabei im Bereich seines Mündungsabschnittes im Wesentlichen mit einer zylindrischen Innenoberfläche ausgebildet.

Geeignete weitere Klemmelemente zum Transport von Vorformlingen werden z.B. in DE 10 2005 011 805 A1, DE 10 2008 023 701 A1, US2014/161924A1, US8360492A1 und US2015/083364A1 beschrieben.

Die für einen Transport der Vorformlinge verwendeten Transportdorne müssen regelmäßig ausgetauscht werden, zum Beispiel zum Umstellen der Vorrichtung zur blasformenden Herstellung von Fertigbehältern auf eine andere Art von Vorformling oder zum Austausch verschlissener oder verunreinigter Teile. DE 36 39 271 A1 beschreibt ein Werkzeug zur Erfassung eines geblasenen flaschenartigen Hohlkörpers, in dem ein Erfassungsdorn mittels einer Schnellschließkupplung an einen Trägerkopf anschließbar ist. US 2014/044597 A1 beschreibt eine Vorrichtung zum Transport von Vorformlingen, die ein Greifglied zum Halten von Vorformlingen enthält. Das Greifglied umfasst einen Dorn und eine Greifstange, die mit dem Dorn verbunden ist, wobei Greifstange und Dorn voneinander ablösbar sein können. DE 10 2008 030863 A1 beschreibt eine magnetische Kupplung an einem Transportelement für einen Vorformling.

Der Austausch der Transportdorne ist relativ aufwendig und muss manuell durchgeführt werden. Um den für die Auswechslung der Transportdorne notwendigen Arbeitsaufwand zu reduzieren, wäre ein stabiles Transportsystem mit maschinell austauschbaren Transportdornen für Vorformlinge wünschenswert.

### Beschreibung der Erfindung

Diese Aufgabe wird erfindungsgemäß gelöst durch ein Transportsystem zum Transport von Vorformlingen in einer Vorrichtung zur blasformenden Herstellung von Fertigbehältern, wobei das Transportsystem eine Transportkette umfasst, deren Kettenglieder ein Tragelement und ein Transportelement umfassen, wobei das Transportsystem dadurch gekennzeichnet ist, dass das Transportelement eine Auflagestruktur und das Tragelement eine Montagestruktur aufweist und die Auflagestruktur und die Montagestruktur wenigstens abschnittsweise formkomplementär zueinander ausgebildet und angeordnet sind, wobei die Auflagestruktur des Transportelements und die Montagestruktur des Tragelements jeweils mindestens ein Verbindungselement aufweisen, die wenigstens abschnittweise formkomplementär zueinander ausgebildet und angeordnet sind. Vorzugsweise ist das Transportsystem ferner zur Übergabe der Vorformlinge an Tragelemente zum Transport durch eine Heizstrecke und zur Abnahme der Vorformlinge von den Tragelementen nach dem Transport der Vorformlinge durch die Heizstrecke eingerichtet.

Die vorliegende Erfindung geht von der Erkenntnis aus, dass eine zweiteilige Ausbildung der Kettenglieder und eine stabile Halterung zwischen den zwei Teilen durch ein Verbindungselement den Vorteil einer leichteren Austauschbarkeit des Tragelements bei gleichzeitiger Stabilität im laufenden Betrieb bietet. Durch die Verbindung zwischen den beiden Teilen, zum Beispiel in Kombination mit einer magnetischen Halterung, kann eine hohe Haltekraft mit einem starken, flächigen Kontakt zwischen Tragelement und Transportelement realisiert werden, so dass die Anforderungen an einen sicheren Transport der Behälter erfüllt sind.

Wie hierin verwendet, umfasst der Begriff "Behälter" sowohl Behältervorformlinge, nachfolgend auch kurz Vorformlinge oder Preform genannt, als auch die daraus hergestellten Produkte, die zur besseren Abgrenzung gegenüber dem allgemeineren Begriff des Behälters als Fertigbehälter bezeichnet werden.

Das Transportsystem umfasst eine Transportkette mit Kettengliedern. Neben der Transportkette kann das Transportsystem weitere Transportelemente, wie zum Beispiel weitere Transportketten, oder Übergabeelemente, wie zum Beispiel Übergaberäder, umfassen.

Jedes Kettenglied ist mindestens zweiteilig, aus Transportelement und Tragelement, ausgebildet. Dies bedeutet, dass das Kettenglied nicht einteilig ausgeprägt ist und daher einfach manuell oder automatisch in Transportelement und Tragelement zerlegt werden kann. Auf diese Weise können einzelne Elemente des Kettenglieds, wie z.B. die Tragelemente, schnell und einfach ausgetauscht werden.

In einer bevorzugten Ausführungsform ist auch das Tragelement mehrteilig, zum Beispiel mindestens zweiteilig, ausgebildet. So umfasst ein bevorzugtes Tragelement zum Beispiel mindestens eine Elementbasis und ein austauschbares und/oder bewegliches Halterelement. Während die Elementbasis über die Montagestruktur mit dem Transportelement verbunden ist, ist das Halterelement zur Halterung und/oder zum Aufnehmen und Abgeben der Vorformlinge eingerichtet.

Das Transportsystem ist geeignet, um in einer Vorrichtung zur blasformenden Herstellung von Fertigbehältern zum Transport von Vorformlingen verwendet zu werden. Insbesondere ist das Transportsystem zur Übergabe der Vorformlinge an Tragelemente zum Transport durch eine Heizstrecke und zur Abnahme der Vorformlinge von den Tragelementen nach dem Transport der Vorformlinge durch die Heizstrecke eingerichtet. Dies bedeutet, dass die Vorformlinge vorzugsweise lediglich für die Dauer des Transports durch die Heizstrecke auf oder an dem Tragelement verbleiben, d.h. von dem Tragelement gehaltert werden, und nach Durchlaufen der Heizstrecke von dem Tragelement getrennt werden, um z.B. anderen Tragelementen zugeführt zu werden.

Die Übergabe und Abnahme der Vorformlinge kann durch bekannte Verfahren und Vorrichtungen durchgeführt werden, zum Beispiel durch ein Übergaberad und dergleichen.

Die Auflagestruktur ist vorzugsweise, abgesehen von den hierin beschriebenen Verbindungs- und Stabilisierungselementen, im Wesentlichen plan. Alternativ kann die Auflagestruktur aber auch strukturiert ausgebildet sein, um das Risiko eines Verrutschens der Montagestruktur gegenüber der Auflagestruktur weiter zu reduzieren. Wie die Auflagestruktur ist auch die Montagestruktur vorzugsweise, abgesehen von den hierin beschriebenen Verbindungs- und Stabilisierungselementen, im Wesentlichen plan. Alternativ kann auch sie, wie oben für die Auflagestruktur beschrieben, strukturiert ausgebildet sein, um das Verrutschungsrisiko zu minimieren.

Die Auflagestruktur und die Montagestruktur sind wenigstens abschnittsweise formkomplementär zueinander ausgebildet und angeordnet. Hierdurch wird sichergestellt, dass die Montagestruktur optimal von dem Magnetfeld der Auflagestruktur erfasst wird und die beiden Strukturen darüber hinaus gegen ein Verrutschen gesichert sind.

Die Auflagestruktur des Transportelements und die Montagestruktur des Tragelements weisen jeweils mindestens ein Verbindungselement auf, die ebenfalls wenigstens abschnittsweise formkomplementär zueinander ausgebildet und angeordnet sind. Dies bedeutet, dass ein Verbindungselement in der Montagestruktur zu einem Verbindungselement in der Auflagestruktur formkomplementär ausgebildet ist.

Die Verbindungselemente in Auflagestruktur und Montagestruktur sind geeignet, das Transportelement und das Tragelement so fest miteinander zu verbinden, dass ein sicherer Transport von Vorformlingen auf dem Tragelement durch die Heizstrecke gewährleistet ist. Gleichzeitig sind die Verbindungselemente derart ausgebildet, dass sie die Trennung von Transportelement und Tragelement ermöglichen, vorzugsweise die manuelle Trennung durch eine Fachkraft.

Bevorzugt ist das Verbindungselement ein Verriegelungselement. Ein Verriegelungselement ist in der Lage, ein Verrutschen oder Loslösen von Transportelement und Tragelement gegen- bzw. voneinander zu verhindern, indem zwei komplementäre Verbindungselemente hakenartig, d.h. eckig gekrümmt, ineinandergreifen.

Vorzugsweise kann das Verbindungselement in der Auflagestruktur in das Verbindungselement in der Montagestruktur eingehängt werden oder *vice versa.* Das Verbindungselement in der Auflagestruktur des Transportelements kann beispielsweise ein Zapfen mit einem T-Profil in Längsrichtung des Zapfens sein und das Verbindungselement in der Montagestruktur des Tragelements ein Schlitz mit einem T-Nut-Profil, wobei der Schlitz in Längsrichtung des Tragelements offen ist, so dass der Zapfen in den Schlitz eingehängt werden kann. Alternativ kann das Verbindungselement in der Montagestruktur des Tragelements beispielsweise ein Zapfen mit einem T-Profil in Längsrichtung des Zapfens sein und das Verbindungselement in der Auflagestruktur des Transportelements ein Schlitz mit einem T-Nut-Profil, wobei der Schlitz in Längsrichtung des Tragelements offen ist, so dass der Zapfen in den Schlitz eingehängt werden kann.

Die Auflagestruktur des Transportelements weist vorzugsweise ferner mindestens einen Magneten auf. Der oder die Magneten sind so im Transportelement angeordnet, dass im Bereich der Auflagestruktur ein Magnetfeld bereitgestellt wird. Der oder die Magnete des Transportelements können Permanentmagnete und/oder Elektromagnete sein. Zusätzlich zu den Magneten können ferromagnetische Einsätze zur Beeinflussung des Magnetfelds in dem Transportelement angeordnet sein.

Die magnetischen Kräfte des Magneten wirken vorzugsweise im wesentlich senkrecht zur Auflagestruktur auf das Tragelement bzw. die Montagestruktur, also in Richtung der Montagestruktur. Insbesondere kann das Magnetfeld so ausgebildet sein, dass die Magnetfeldlinien überwiegend (z.B. zu 60% oder mehr, 70% oder mehr, oder 80% oder mehr) die Auflagestruktur des Transportelements senkrecht schneiden. Hierdurch ist eine ausreichend starke Haltekraft für das Tragelement gewährleistet.

Das Transportelement selbst kann aus einem amagnetischen, paramagnetischen oder diamagnetischen Material sein. In bevorzugten Ausführungsformen ist das Transportelement aus Stahl und/oder Eisen. Der oder die Magnete können in geeignete Aussparungen des Transportelements eingesetzt sein.

Die Montagestruktur des Tragelements enthält bevorzugt ein ferromagnetisches Material, wie z.B. Eisen, und/oder mindestens einen Magneten, das bzw. der von dem Magnetfeld der Auflagestruktur angezogen wird.

Es versteht sich, dass die Anordnung von Magnetfeld und magnetischem Material innerhalb der beiden Elemente des Kettenglieds auch umgekehrt sein kann. In einer alternativen Ausführungsform weist somit die Montagestruktur des Tragelements mindestens einen Magneten auf, während die Auflagestruktur des Transportelements bevorzugt ein ferromagnetisches Material, wie z.B. Eisen, und/oder mindestens einen Magneten enthält, das bzw. der von dem Magnetfeld der Montagestruktur angezogen wird.

Darüber hinaus können die Auflagestruktur des Transportelements und die Montagestruktur des Tragelements jeweils mindestens ein Stabilisierungselement aufweisen, die wenigstens abschnittsweise formkomplementär zueinander ausgebildet und angeordnet sind. Dies bedeutet, dass ein Stabilisierungselement in der Montagestruktur zu einem Stabilisierungselement in der Auflagestruktur formkomplementär ausgebildet ist. Durch die Stabilisierungselemente kann das Transportsystem zum Beispiel gegen ein Verrutschen des Tragelements gegenüber dem Transportelement gesichert werden.

Das mindestens eine Stabilisierungselement in der Auflagestruktur des Transportelements kann beispielsweise eine Extrusion in der Auflagestruktur sein und das mindestens eine Stabilisierungselement in der Montagestruktur des Tragelements kann eine formkomplementäre Einbuchtung in der Montagestruktur sein.

Der oder die Magneten in der Auflagestruktur wirken derart mit dem ferromagnetischen Material und/oder dem oder den Magneten in der Montagestruktur zusammen, dass eine magnetische Anziehungskraft zwischen der Montagestruktur und der Auflagestruktur wirkt. Im Wesentlichen durch diese magnetische Anziehungskraft werden das Tragelement und das Transportelement zusammengehalten. Dies schließt selbstverständlich nicht aus, dass der Zusammenhalt des Tragelements und des Transportelements durch Verbindungs- und Stabilisierungselemente verstärkt bzw. stabilisiert wird.

Zum Trennen der Verbindung zwischen der Auflagestruktur und der Montagestruktur kann das Tragelement in geeigneter Richtung von dem Transportelement abgekantet und durch Zugkraft abgelöst werden. Hierdurch wird die Verbindung zwischen den Verbindungselementen und ggf. auch die zwischen den Strukturen wirkende Magnetkraft überwunden.

Durch die Verbindung mittels der Verbindungselemente und ggfs eine magnetische Halterung des Tragelements bzw. der Montagestruktur an der Auflagestruktur ist auch eine automatisierte Montage und Demontage von Tragelementen möglich.

Vorzugsweise sind die Wärmeausdehnungskoeffizienten der Auflagestruktur des Transportelements und der Montagestruktur des Tragelements so aufeinander abgestimmt, dass eine möglichst spannungsfreie Lagerung im Betriebstemperaturbereich gegeben ist.

Die Erfindung betrifft auch eine Vorrichtung zur blasformenden Herstellung von Fertigbehältern aus Vorformlingen, insbesondere aus Vorformlingen aus einem thermoplastischen Material, mit wenigstens einer Heizeinrichtung zum thermischen Konditionieren der Vorformlinge entlang einer Transportstrecke und mit mindestens einer Umformeinrichtung zum Umformen thermisch konditionierter Vorformlinge in den Fertigbehälter, dadurch gekennzeichnet, dass die Vorrichtung mindestens ein erfindungsgemäßes Transportsystem zum Transport der Vorformlinge aufweist, wobei das Transportsystem insbesondere im Bereich der Heizeinrichtung angeordnet ist. Die Heizeinrichtung umfasst eine Heizstrecke.

Im Hinblick auf die verwendeten Blasstationen sind unterschiedliche Ausführungsformen bekannt. Bei Blasstationen, die auf rotierenden Transporträdern angeordnet sind, nämlich auf einem sogenannten Blasrad, ist eine buchartige Aufklappbarkeit der Formträger häufig anzutreffen. Es ist aber auch möglich, relativ zueinander verschiebbare oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Fertigbehälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Die Erfindung betrifft auch die Verwendung eines erfindungsgemäßen Transportsystems, in einer Vorrichtung zur blasformenden Herstellung von Fertigbehältern aus Vorformlingen, insbesondere aus Vorformlingen aus einem thermoplastischen Material, mit wenigstens einer Heizeinrichtung zum thermischen Konditionieren der Vorformlinge entlang einer Transportstrecke und mit mindestens einer Umformeinrichtung zum Umformen thermisch konditionierter Vorformlinge in den Fertigbehälter, wobei die Verwendung insbesondere im Bereich der Heizeinrichtung erfolgt.

Darüber hinaus betrifft die Erfindung auch ein Verfahren zum Auswechseln von mindestens einem Tragelement eines erfindungsgemäßen Transportsystems, bei dem das Tragelement des Transportsystem von dem Transportelement des Transportsystems getrennt und durch ein anderes Tragelement ersetzt wird.

### Kurze Beschreibung der Figuren

In den Zeichnungen ist ein Ausführungsbeispiel der Erfindung schematisch dargestellt. Es zeigen:
- Fig. 1: eine perspektivische Darstellung einer Blasstation zur Herstellung von Behältern aus Vorformlingen;
- Fig. 2: einen Längsschnitt durch eine Blasform, in der ein Vorformling gereckt und expandiert wird;
- Fig. 3: eine Skizze zur Veranschaulichung eines grundsätzlichen Aufbaus einer Vorrichtung zur Blasformung von Behältern;
- Fig. 4: eine modifizierte Heizstrecke mit vergrößerter Heizkapazität;
- Fig. 5: eine räumliche Darstellung des zusammengesetzten Kettenglieds bzw. Transportdorns;
- Fig. 6: eine räumliche Darstellung des auseinandergenommenen Kettenglieds bzw. Transportdorns; und

- Fig. 7: eine weitere räumliche Darstellung des auseinandergenommenen Kettenglieds bzw. Transportdorms.

### Ausführungsbeispiele

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

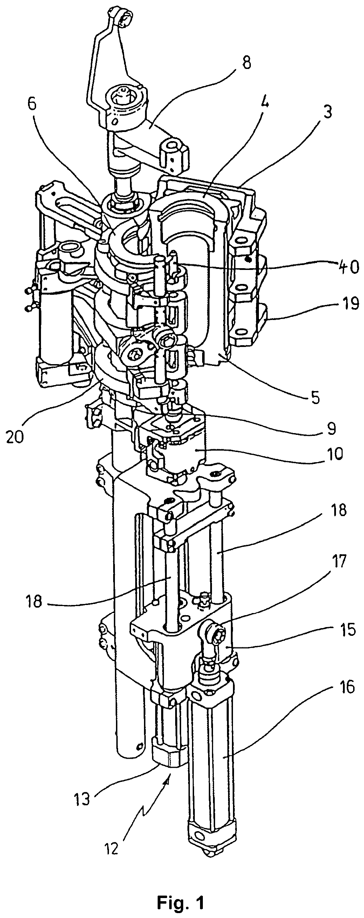

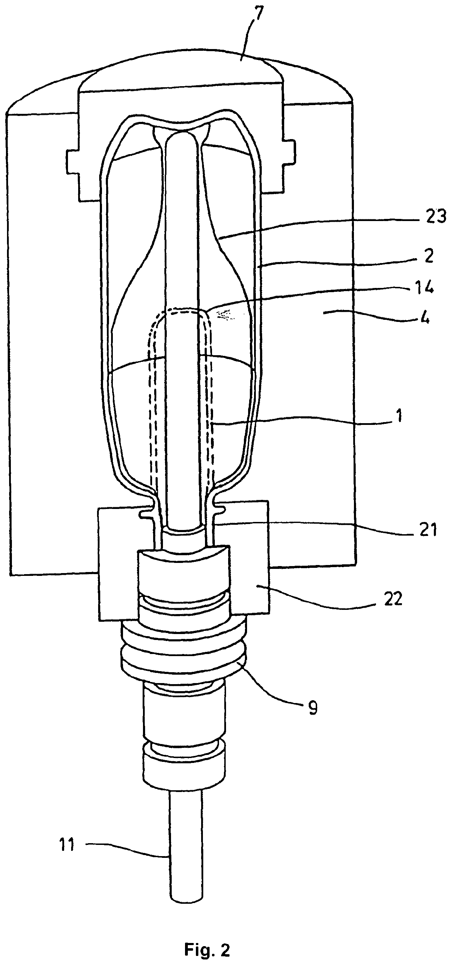

Der prinzipielle Aufbau einer Vorrichtung zur Umformung von Vorformlingen 1 in Behälter 2 ist in Fig. 1 und in Fig. 2 dargestellt. Die Anordnung kann dabei wie dargestellt oder in einer vertikalen Ebene um 180°C gedreht erfolgen.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Halteelement 9 fixiert sein. Es ist beispielsweise möglich, den Vorformling 1 über Zangen oder andere Handhabungsmittel direkt in die Blasform 4 einzusetzen.

Zur Ermöglichung einer Druckluftzuleitung ist unterhalb der Blasform 4 ein Anschlusskolben 10 angeordnet, der dem Vorformling 1 Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings 1 erfolgt bei diesem Ausführungsbeispiel mit Hilfe einer Reckstange 11, die von einem Zylinder 12 positioniert wird. Gemäß einer anderen Ausführungsform wird eine mechanische Positionierung der Reckstange 11 über Kurvensegmente durchgeführt, die von Abgriffrollen beaufschlagt sind. Die Verwendung von Kurvensegmenten ist insbesondere dann zweckmäßig, wenn eine Mehrzahl von Blasstationen 3 auf einem rotierenden Blasrad 25 angeordnet sind.

Bei der in Fig. 1 dargestellten Ausführungsform ist das Recksystem derart ausgebildet, dass eine Tandem-Anordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere kann der Sekundärzylinder 16 derart kurvengesteuert eingesetzt werden, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40.

Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.
Fig. 2 zeigt zusätzlich zum geblasenen Behälter 2 auch gestrichelt eingezeichnet den Vorformling 1 und schematisch eine sich entwickelnde Behälterblase 23.

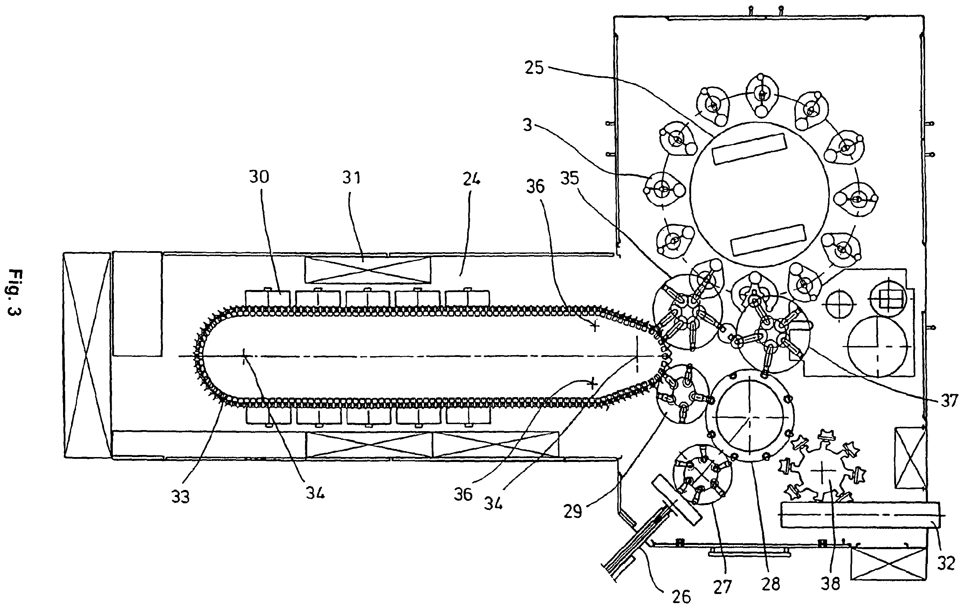

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 sowie Gebläse 31 angeordnet, um die Vorformlinge 1 zu temperieren. Nach einer ausreichenden Temperierung der Vorformlinge 1 werden diese von einem Übergaberad 35 an das Blasrad 25 übergeben, in dessen Bereich die Blasstationen 3 angeordnet sind. Die fertig geblasenen Behälter 2 werden von weiteren Übergaberädern 37, 28, 38 einer Ausgabestrecke 32 zugeführt. Das Übergaberad 37 ist dabei als ein Entnahmerad, das Übergaberad 38 als ein Ausgaberad ausgebildet.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 aus einer Vielzahl umlaufender Transportelemente 33 ausgebildet ist, die kettenartig aneinandergereiht und entlang von Umlenkrädern 34, 36 geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad 27 zugewandten Ausdehnung der Heizstrecke 24 ein einzelnes, relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 27 und des Blasrades 25 relativ zueinander erweist sich die dargestellte Anordnung als besonders zweckmäßig, da im Bereich der entsprechenden Ausdehnung der Heizstrecke 24 drei Umlenkräder 34, 36 positioniert sind, und zwar jeweils die kleineren Umlenkräder 36 im Bereich der Überleitung zu den linearen Verläufen der Heizstrecke 24 und das größere Umlenkrad 34 im unmittelbaren Übergabebereich zum Übergaberad 27 und zum Blasrad 25. Alternativ zur Verwendung von kettenartigen Transportelementen 33 ist es beispielsweise auch möglich, ein rotierendes Heizrad zu verwenden.

Nach einem fertigen Blasen der Behälter 2 werden diese vom Übergaberad 38 aus dem Bereich der Blasstationen 3 herausgeführt und zur Ausgabestrecke 32 transportiert.

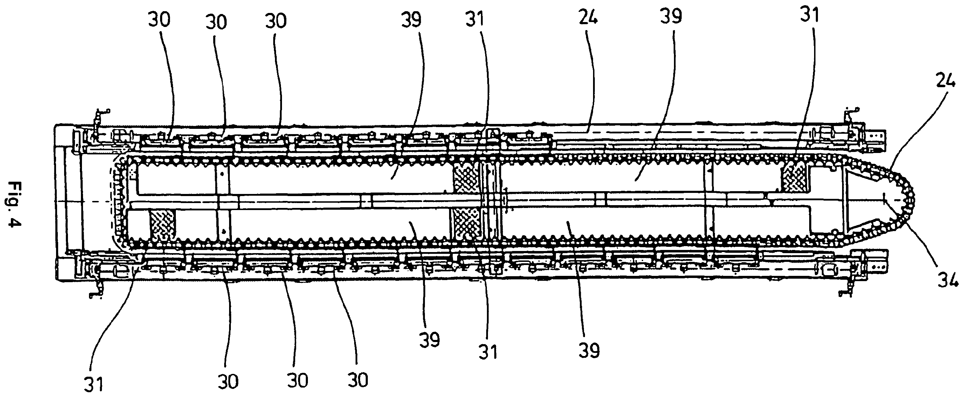

In der in Fig. 4 dargestellten modifizierten Heizstrecke 24 können durch die größere Anzahl von Heizstrahlern 30 eine größere Menge von Vorformlingen 1 je Zeiteinheit temperiert werden. Die Gebläse 31 leiten hier Kühlluft in den Bereich von Kühlluftkanälen 39 ein, die den zugeordneten Heizstrahlern 30 jeweils gegenüberliegen und die Kühlluft über Ausströmöffnungen abgeben. Durch die Anordnung der Ausströmrichtungen wird eine Strömungsrichtung für die Kühlluft im Wesentlichen quer zu einer Transportrichtung der Vorformlinge 1 realisiert. Die Kühlluftkanäle 39 können im Bereich der den Heizstrahlern 30 gegenüberliegenden Oberflächen Reflektoren für die Heizstrahlung bereitstellen. Darüber hinaus ist es möglich, über die abgegebene Kühlluft auch eine Kühlung der Heizstrahler 30 zu realisieren.

Ein Transport der Vorformlinge 1 und der Behälter 2 durch die Blasmaschine kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe 26 mit seiner Mündung in lotrechter Richtung nach oben orientiert zugeführt, anschließend gedreht, entlang der Heizstrecke 24 und des Blasrades 25 mit seiner Mündung in lotrechter Richtung nach unten orientiert gefördert und vor einem Erreichen der Ausgabestrecke 32 wieder gedreht. Gemäß einer anderen Variante wird der Vorformling 2 im Bereich der Heizstrecke 24 mit seiner Mündung in lotrechter Richtung nach unten orientiert beheizt, vor Erreichen des Blasrades 25 jedoch wieder um 180° gedreht.

Gemäß einer dritten Ausführungsvariante durchläuft der Vorformling den gesamten Bereich der Blasmaschine ohne Durchführung von Wendevorgängen mit seiner Mündung in lotrechter Richtung nach oben orientiert.

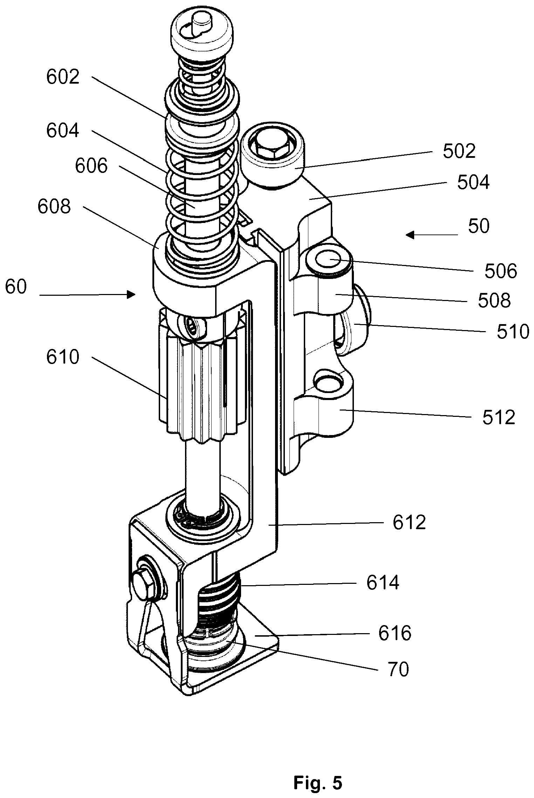

Fig. 5 zeigt den grundsätzlichen Aufbau des Kettenglieds bzw. des Transportdorns, der die zu erwärmenden Vorformlinge 1 entlang von Heizelementen, z.B. Heizstrahlern 30, durch eine Heizstrecke transportiert. Gezeigt ist eine räumliche Darstellung des zusammengesetzten Kettenglieds. Das Kettenglied weist ein Transportelement 50 und ein Tragelement 60 auf.

Das gezeigte Transportelement 50 weist eine Führungsrolle 502 auf, die ein seitliches Verrutschen des Transportelements verhindert. Die Führungsrolle 502 kann zum Beispiel während des umlaufenden Transports von Vorformlingen 1 in einer Heizstrecke an einer Führungsschiene entlanggeführt werden. Darüber hinaus weist das Transportelement 50 eine Transportrolle 510 auf, mittels derer das Kettenglied um die Heizstrecke herum befördert werden kann. Die Transportrolle 510 kann zum Beispiel auf einem Beförderungsband aufliegen. Schließlich sind Verbindungsgelenke 508, 512 und Gleithülsen 506 dargestellt, mittels derer das Kettenglied mit dem nächsten Kettenglied der Transportkette verbunden ist.

Das beispielhaft gezeigte Tragelement 60 weist eine Elementbasis 612, einen dem Vorformling zugewandten Kopf 614 sowie einen mit dem Kopf verbundenen Schaft 606 auf. Der Schaft 606 mit dem Kopf 614 ist relativ zur Elementbasis 612 in Richtung einer Elementlängsachse beweglich. Eine Grundposition des Schaftes 606 relativ zur Elementbasis 612 kann von einer Feder 604 vorgegeben werden. Die Feder 604 ist beim dargestellten Ausführungsbeispiel zwischen einer Oberseite 608 der Elementbasis 612 und einem seitlich über den Schaft 606 überstehenden Endsegment 602 angeordnet.

Gemäß eines typischen Ausführungsbeispiels können eine Mehrzahl von Transportelementen 50 kettenartig miteinander oder mit einer umlaufenden Transportkette verbunden werden. Das Transportelement 50 kann aber auch an umlaufenden Übergaberädern oder sonstigen Einrichtungen angebracht sein.

In dem zusammengesetzten Zustand des Kettenglieds sind das Tragelement 60 und das Transportelement 50 durch Verbindungselemente und gegebenenfalls durch eine zusätzliche Stabilisierung durch Magnetkraft und/oder Stabilisierungselemente fest miteinander verbunden. Die Verbindung zwischen Tragelement 60 und Transportelement 50 ist ausreichend fest, um eine Trennung und ein Verrutschen der Elemente während des Transports der Vorformlinge 1, insbesondere des Transports in der Blasstation 3 und der Heizstrecke 24, zu verhindern. Gleichzeitig ist die Verbindung locker genug, um das Austauschen des Tragelements 60 zu ermöglichen. Bevorzugte Verbindungselemente und Magnetfeldstärken, die diese Kriterien erfüllen, sind hierin beschrieben und können von dem Fachmann durch Standardtestverfahren ermittelt werden.

Da die Auflagestruktur 520 des Transportelements 50 und die Montagestruktur 620 des Tragelements wenigstens abschnittsweise formkomplementär zueinander ausgebildet sind und durch Verriegelungselemente und ggfs. Magnetkraft fest miteinander verbunden sind, gibt es zwischen den formkomplementären Abschnitten der Auflagestruktur 520 und der Montagestruktur 620 im zusammengesetzten Zustand vorzugsweise im Wesentlichen keinen Abstand.

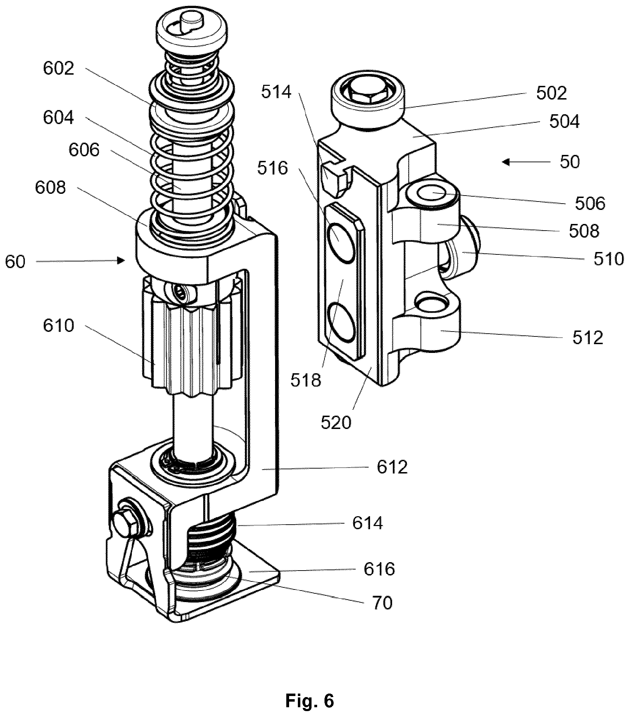

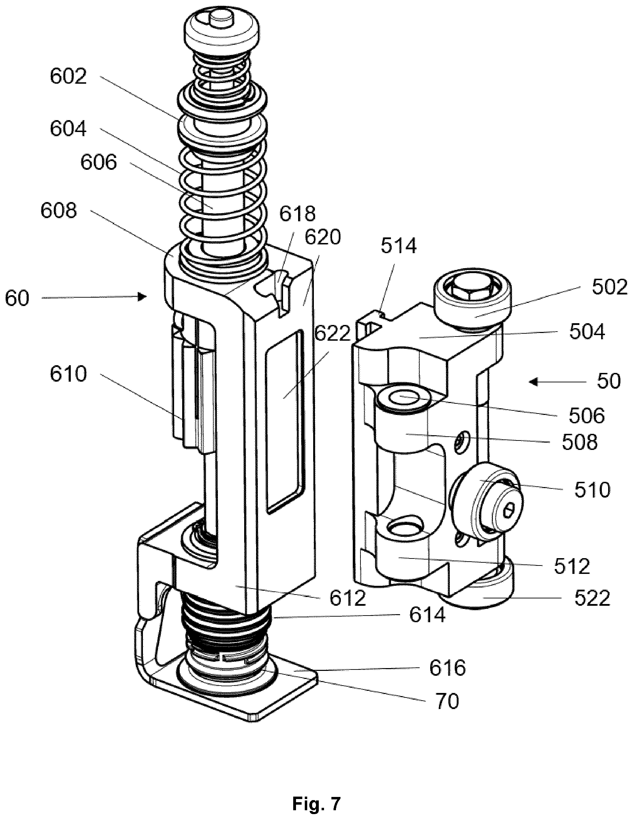

Fig. 6 und Fig. 7 zeigen zur weiteren Veranschaulichung den grundsätzlichen Aufbau des auseinandergenommenen Kettenglieds, das die zu erwärmenden Vorformlinge 1 entlang von Heizelementen, z.B. Heizstrahlern 30, transportiert. Gezeigt sind räumliche Darstellungen des auseinandergenomenen Kettenglieds. Das Kettenglied weist ein Transportelement 50 und ein Tragelement 60 auf.

Aus Fig. 6 ist zu erkennen, dass das Transportelement 50 eine Auflagestruktur 520 aufweist. Die Auflagestruktur 520 ist vorzugsweise wenigstens abschnittsweise formkomplementär zu der Montagestruktur 620 des Tragelements ausgebildet. Dabei weist die dargestellte Auflagestruktur 520 mindestens einen Magneten 516 auf, zum Beispiel wie in Fig. 6 gezeigt, zwei Magneten 516. Die Magneten 516 sind in dem dargestellten Beispiel senkrecht übereinander in Längsrichtung des Transportelements angebracht. Alternativ können die Magneten 516 auch in anderer Anordnung über die Auflagestruktur 520 des Transportelements 50 verteilt werden. Die Magneten 516 müssen nicht unmittelbar an der Oberfläche der Auflagestruktur 520 angebracht, sondern können auch von der Auflagestruktur 520 verdeckt sein, so lange sichergestellt ist, dass auf der Auflagestruktur 520 ein Magnetfeld bereitgestellt wird, das eine ausreichend starke Bindung des Tragelements 60 an das Transportelement 50 gewährleistet ist.

Darüber hinaus ist aus Fig. 6 zu erkennen, dass die gezeigte Auflagestruktur 520 ein Verbindungselement aufweist, das als Zapfen 514 mit T-Profil ausgeprägt ist. Der Zapfen 514 ist abschnittsweise formkomplementär zu dem in Fig. 7 erkennbaren Schlitz 618 mit T-Nut-Profil ausgebildet.

Die beispielhaft gezeigte Auflagestruktur 520 weist darüber hinaus ein Stabilisierungselement auf, das als Extrusion 518 in der Auflagestruktur ausgeprägt ist. Die gezeigte Extrusion 518 ist im Wesentlichen rechteckig und umfasst die zwei Magnete 516.

Aus Fig. 7 ist zu erkennen, dass das Tragelement 60 eine Montagestruktur 620 aufweist. Die Montagestruktur 620 ist vorzugsweise wenigstens abschnittsweise formkomplementär zu der Auflagestruktur 520 des Transportelements ausgebildet. Dabei enthält die Montagestruktur ein ferromagnetisches Material, wie z.B. Eisen, und/oder mindestens ebenfalls einen Magneten, der von dem Magnetfeld der Auflagestruktur angezogen wird. Die in Fig. 7 gezeigte Montagestruktur 620 ist aus einem ferromagnetischen Material.

Darüber hinaus ist aus Fig. 7 ersichtlich, dass die gezeigte Montagestruktur 620 ein Verbindungselement aufweist, das als Schlitz 618 mit T-Nut-Profil ausgeprägt ist. Der Schlitz 618 ist abschnittsweise formkomplementär zu dem in Fig. 6 erkennbaren Zapfen 514 mit T-Profil. Es ist erkennbar, dass der Zapfen 514 in den Schlitz 618 einhängbar ist. Durch das Einhängen des Zapfens 514 in den Schlitz 618 wird eine feste Verbindung zwischen dem Transportelement 50 und dem Tragelement 60 etabliert und die beiden Elemente insbesondere auch gegen Verrutschen gesichert.

Die beispielhaft in Fig. 7 gezeigte Montagestruktur 620 weist darüber hinaus ein Stabilisierungselement auf, das als Einbuchtung 622 in der Montagestruktur 620 ausgeprägt ist. Die gezeigte Einbuchtung 622 ist, wie die Extrusion 518, im Wesentlichen rechteckig und damit formkomplementär zu der Extrusion 518. Durch das Eingreifen der Extrusion 518 in die Einbuchtung 622 bei Zusammenführung des Tragelements 60 und des Transportelements 50 wird die Verbindung zwischen den beiden Elementen verstärkt und insbesondere auch gegen Verrutschen gesichert.

**Bezugszeichenliste:**

| | | | |
|---|---|---|---|
| 1 | Vorformling | 27 | Übergaberad |
| 2 | Behälter | 28 | Übergaberad |
| 3 | Blasstation | 29 | Übergaberad |
| 4 | Blasform | 30 | Heizstrahler |
| 5 | Formhälfte | 31 | Gebläse |
| 6 | Formhälfte | 32 | Ausgabestrecke |
| 7 | Bodenteil | 33 | Transportelemente |
| 8 | Hubvorrichtung | 34 | Umlenkrad |
| 9 | Halteelement | 35 | Übergaberad |
| 10 | Anschlusskolben | 36 | Umlenkrad |
| 11 | Reckstange | 37 | Übergaberad |
| 12 | Zylinder | 38 | Übergaberad |
| 13 | Primärzylinder | 39 | Kühlluftkanäle |
| 14 | Boden des Vorformlings | 40 | Verriegelungseinrichtung |
| 15 | Schlitten | 50 | Transportelement |
| 16 | Sekundärzylinder | 502 | Führungsrolle |
| 17 | Führungsrolle | 504 | Oberseite des Transportelements |
| 18 | Führungselement | 506 | Gleithülse |
| 19 | Träger | 508 | Verbindungsgelenk |
| 20 | Träger | 510 | Transportrolle |
| 21 | Mündungsabschnitt | 512 | Verbindungsgelenk |
| 22 | Gewindeeinsatz | 514 | Zapfen mit T-Profil |
| 23 | Behälterblase | 516 | Magnet |
| 24 | Heizstrecke | 518 | Extrusion in der Auflagestruktur |
| 25 | Blasrad | 520 | Auflagestruktur |
| 26 | Vorformlingseingabe | 60 | Tragelement |
| 602 | Endsegment | | |
| 604 | Feder | | |
| 606 | Schaft | | |
| 608 | Oberseite der Elementbasis | | |
| 610 | Zahnrad | | |
| 612 | Elementbasis | | |
| 614 | Kopf | | |
| 616 | Strahlungsblende | | |
| 618 | Schlitz mit T-Nut-Profil | | |
| 620 | Montagestruktur | | |
| 622 | Einbuchtung | | |
| 70 | Mündungsabschnitt Vorformling | | |

## Patentansprüche

1. Transportsystem zum Transport von Vorformlingen (1) in einer Vorrichtung zur blasformenden Herstellung von Fertigbehältern, wobei das Transportsystem eine Transportkette umfasst, deren Kettenglieder ein Tragelement (60) und ein Transportelement (50) umfassen, wobei das Transportelement (50) eine Auflagestruktur (520) und das Tragelement (60) eine Montagestruktur (620) aufweist und die Auflagestruktur (520) und die Montagestruktur (620) wenigstens abschnittsweise formkomplementär zueinander ausgebildet und angeordnet sind, wobei die Auflagestruktur (520) des Transportelements (50) und die Montagestruktur (620) des Tragelements (60) jeweils mindestens ein Verbindungselement aufweisen, die wenigstens abschnittweise formkomplementär zueinander ausgebildet und angeordnet sind, das Transportsystem ferner zur Übergabe der Vorformlinge (1) an Tragelemente (60) zum Transport durch eine Heizstrecke (24) und zur Abnahme der Vorformlinge (1) von den Tragelementen (60) nach dem Transport der Vorformlinge (1) durch die Heizstrecke (24) eingerichtet ist, wobei das Transportsystem **dadurch gekennzeichnet ist, dass** das Transportelement (50) mindestens einen Magneten (516) aufweist, der so im Transportelement (50) angeordnet ist, dass im Bereich der Auflagestruktur (520) ein Magnetfeld bereitgestellt wird, und die Montagestruktur (620) ein ferromagnetisches Material und/oder mindestens einen Magneten, der von dem Magnetfeld der Auflagestruktur angezogen wird, enthält.

2. Transportsystem nach Anspruch 1, wobei das Verbindungselement vorzugsweise ein Verriegelungselement ist.

3. Transportsystem nach einem der Ansprüche 1 bis 2, **dadurch gekennzeichnet, dass** das ferromagnetische Material Eisen ist.

4. Transportsystem nach einem der Ansprüche 1 bis 3, **dadurch gekennzeichnet, dass** das Verbindungselement in der Auflagestruktur (520) des Transportelements (50) ein Zapfen (514) mit einem T-Profil in Längsrichtung des Zapfens (514) ist und das Verbindungselement in der Montagestruktur (620) des Tragelements (60) ein Schlitz (618) mit einem T-Nut-Profil ist, wobei der Schlitz (618) in Längsrichtung des Tragelements (60) offen ist, so dass der Zapfen (514) in den Schlitz (618) eingehängt werden kann.

5. Transportsystem nach einem der Ansprüche 1 bis 4, **dadurch gekennzeichnet, dass** die Auflagestruktur (520) des Transportelements (50) und die Montagestruktur (620) des Tragelements (60) jeweils mindestens ein Stabilisierungselement aufweisen, die wenigstens abschnittsweise formkomplementär zueinander ausgebildet und angeordnet sind.

6. Transportsystem nach Anspruch 5, **dadurch gekennzeichnet, dass** das mindestens eine Stabilisierungselement in der Auflagestruktur (520) des Transportelements (50) eine Extrusion (518) in der Auflagestruktur (520) ist und das mindestens eine Stabilisierungselement in der Montagestruktur (620) des Tragelements (60) eine formkomplementäre Einbuchtung (622) in der Montagestruktur (620) ist.

7. Vorrichtung zur blasformenden Herstellung von Fertigbehältern aus Vorformlingen, insbesondere aus Vorformlingen (1) aus einem thermoplastischen Material, mit wenigstens einer Heizeinrichtung zum thermischen Konditionieren der Vorformlinge entlang einer Transportstrecke und mit mindestens einer Umformeinrichtung zum Umformen thermisch konditionierter Vorformlinge in den Fertigbehälter, **dadurch gekennzeichnet, dass** die Vorrichtung mindestens ein Transportsystem nach einem der Ansprüche 1 bis 7 zum Transport der Vorformlinge (1) aufweist, wobei das Transportsystem insbesondere im Bereich der Heizeinrichtung angeordnet ist.

8. Vorrichtung nach Anspruch 7, **dadurch gekennzeichnet, dass** das Transportsystem zur Übergabe der Vorformlinge (1) von einem umlaufenden Übergaberad (29) an Tragelemente (60) zum Transport durch eine Heizstrecke (24) und zur Abnahme der Vorformlinge (1) von den Tragelementen (60) nach dem Transport der Vorformlinge (1) durch die Heizstrecke (24) durch ein umlaufendes Übergaberad (35) eingerichtet ist.

9. Verwendung eines Transportsystems nach einem der Ansprüche 1 bis 6, in einer Vorrichtung zur blasformenden Herstellung von Fertigbehältern aus Vorformlingen (1), insbesondere aus Vorformlingen (1) aus einem thermoplastischen Material, mit wenigstens einer Heizeinrichtung zum thermischen Konditionieren der Vorformlinge entlang einer Transportstrecke und mit mindestens einer Umformeinrichtung zum Umformen thermisch konditionierter Vorformlinge (1) in den Fertigbehälter, wobei die Verwendung insbesondere im Bereich der Heizeinrichtung erfolgt.

10. Verfahren zum Auswechseln von mindestens einem Tragelement (60) eines Transportsystems nach einem der Ansprüche 1 bis 6, bei dem das Tragelement (60) des Transportsystems von dem Transportelement (50) des Transportsystems getrennt und durch ein anderes Tragelement (60) ersetzt wird.

## Claims

1. Transport system for transporting preforms (1) in a device for the blow-moulding production of prefabricated containers, wherein the transport system comprises a transport chain, the chain links of which comprise a support element (60) and a transport element (50), wherein the transport element (50) comprises a support structure (520) and the support element (60) comprises an assembly structure (620), and the support structure (520) and the assembly structure (620) are shaped and arranged in a shape complementary to one other at least in sections, wherein the support structure (520) of the transport element (50) and the assembly structure (620) of the support element (60) each comprises at least one connecting element, each being shaped and arranged in a shape complementary to one another at least in sections, the transport system is furthermore set up to transfer the preforms (1) to support elements (60) for transport through a heating section (24) and to pick up the preforms (1) from the support elements (60) after transporting the preforms (1) through the heating section (24), wherein the transport system is **characterized in that** the transport element (50) comprises at least one magnet (516) which is arranged in the transport element (50) so that a magnetic field is provided in the region of the support structure (520), and the assembly structure (620) contains a ferromagnetic material and/or at least one magnet which is attracted by the magnetic field of the support structure.

2. Transport system according to Claim 1, wherein the connecting element is preferably a locking element.

3. Transport system according to any one of the Claims 1 to 2, **characterized in that** the ferromagnetic material is iron.

4. Transport system according to any one of the Claims 1 to 3, **characterized in that** the connecting element in the support structure (520) of the transport element (50) is a pin (514) with a T-profile in the longitudinal direction of the pin (514) and the connecting element in the assembly structure (620) of the support element (60) is a slot (618) with a T-groove profile, wherein the slot (618) in the longitudinal direction of the support element (60) is open in such a way that the pin (514) can be hooked into the slot (618).

5. Transport system according to any one of the Claims 1 to 4, **characterized in that** the support structure (520) of the transport element (50) and the assembly structure (620) of the support element (60) each comprise at least one stabilizing element, each being at least partially shaped and arranged in a shape complementary to one another.

6. Transport system according to Claim 5, **characterized in that** the at least one stabilizing element in the support structure (520) of the transport element (50) is an extrusion (518) in the support structure (520) and that at least one stabilizing element in the assembly structure (620) of the support element (60) is an indentation (622) that is complementary in shape in the assembly structure (620).

7. Device for the blow-moulding production of prefabricated containers from preforms, in particular, preforms (1) made of a thermoplastic material, with at least one heating device for heat treatment of the preforms along a transport route and with at least one shaping device for shaping heat-treated preforms into the prefabricated container, **characterized in that** the device comprises at least one transport system according to one of the Claims 1 to 7 for transporting the preforms (1), wherein the transport system, in particular, is arranged in the region of the heating device.

8. Device according to Claim 7, **characterized in that** the transport system is set up to transfer the preforms (1) from a revolving transfer wheel (29) to support elements (60) for transporting through a heating section (24) and for picking up the preforms (1) from the support elements (60) after the transport of the preforms (1) through the heating section (24) by means of a revolving transfer wheel (35).

9. Use of a transport system according to any one of the Claims 1 to 6, in a device for the blow-moulding production of prefabricated containers from preforms (1), in particular, from preforms (1) made of a thermoplastic material, with at least one heating device for the heat treatment of the preforms along a transport route and with at least one shaping device for shaping heat-treated preforms (1) into the prefabricated container, wherein, the use takes place in the region of the heating device in particular.

10. Method for replacing at least one support element (60) of a transport system according to any one of the Claims 1 to 6, in which the support element (60) of the transport system is separated from the transport element (50) of the transport system and is replaced by another support element (60).

## Revendications

1. Système de transport pour le transport de préformes (1) dans un dispositif de production de récipients prêts à l'emploi moulés par soufflage, le système de transport comprenant une chaîne de transport dont les chaînons comprennent un élément porteur (60) et un élément de transport (50), l'élément de transport (50) présentant une structure d'appui (520) et l'élément porteur (60) présentant une structure de montage (620), la structure d'appui (520) et la structure de montage (620) étant, sur certaines sections au moins, conformées et agencées en complémentarité de forme, la structure d'appui (520) de l'élément de transport (50) et la structure de montage (620) de l'élément porteur (60) présentant respectivement au moins un élément de liaison et les éléments de liaison étant, sur certaines sections au moins, conformés et agencés en complémentarité de forme, le système de transport étant en outre conçu pour remettre les préformes (1) à des éléments porteurs (60) en vue de leur transport le long d'une section de chauffage (24) et retirer les préformes (1) des éléments porteurs (60) après le transport des préformes (1) le long de la section de chauffage (24), le système de transport étant **caractérisé en ce que** l'élément de transport (50) présente au moins un aimant (516) disposé dans l'élément de transport (50) de façon à ce qu'un champ magnétique soit mis à disposition dans la zone de la structure d'appui (520), et **en ce que** la structure de montage (620) contient un matériau ferromagnétique et/ou au moins un aimant qui est attiré par le champ magnétique de la structure d'appui.

2. Système de transport selon la revendication 1, l'élément de liaison étant de préférence un élément de verrouillage.

3. Système de transport selon l'une des revendications 1 à 2, **caractérisé en ce que** le matériau ferromagnétique est du fer.

4. Système de transport selon l'une des revendications 1 à 3, **caractérisé en ce que** l'élément de liaison dans la structure d'appui (520) de l'élément de transport (50) est un tenon (514) avec un profil longitudinal en T et l'élément de liaison de la structure de montage (620) de l'élément porteur (60) est une fente (618) avec un profil d'encoche en T, la fente (618) étant ouverte en sens longitudinal de l'élément porteur (60) de sorte que le tenon (514) peut être accroché dans la fente (618).

5. Système de transport selon l'une des revendications 1 à 4, **caractérisé en ce que** la structure d'appui (520) de l'élément de transport (50) et la structure de montage (620) de l'élément porteur (60) présentent respectivement au moins un élément de stabilisation, lesquels sont, sur certaines sections au moins, conformées et agencées en complémentarité de forme.

6. Système de transport selon la revendication 5, **caractérisé en ce que** le{s) élément(s) de stabilisation dans la structure d'appui (520) de l'élément de transport (50) est une extrusion (518) de la structure d'appui (520) et le(s) élément(s) de stabilisation dans la structure de montage (620) de l'élément porteur (60) est un creux (622) de forme complémentaire dans la structure de montage (620).

7. Dispositif de production par moulage par soufflage de récipients prêts à l'emploi à partir de préformes, notamment à partir de préformes (1) en un matériau thermoplastique, avec au moins un dispositif de chauffage pour le conditionnement thermique des préformes le long d'un parcours de transport, et avec au moins un dispositif de formage pour !a transformation des préformes thermiquement conditionnée en récipient prêt à l'emploi, **caractérisé en ce que** le dispositif présente au moins un système de transport selon l'une des revendications 1 à 7 pour le transport des préformes (1), le système de transport étant notamment agencé dans la zone du dispositif de chauffage.

8. Dispositif selon la revendication 7, **caractérisé en ce que** le système de transport est conçu pour remettre les préformes (1) d'une roue de transfert (29) en rotation à des éléments porteurs (60) en vue de leur transport le long d'une section de chauffage (24) et retirer les préformes (1) des éléments porteurs (60) par une roue de transfert (35) en rotation après le transport des préformes (1) le long de la section de chauffage (24)

9. Utilisation d'un système de transport selon l'une des revendications 1 à 6 dans un dispositif de production par moulage par soufflage de récipients prêts à l'emploi à partir de préformes (1), notamment à partir de préformes (1) en un matériau thermoplastique, avec au moins un dispositif de chauffage pour le conditionnement thermique des préformes le long d'un parcours de transport, et avec au moins un dispositif de formage pour la transformation des préformes (1) thermiquement conditionnée en récipient prêt à l'emploi, l'utilisation ayant notamment lieu dans la zone du dispositif de chauffage.

10. Procédé de remplacement d'au moins un élément porteur (60) d'un système de transport selon l'une des revendications 1 à 6 dans le cadre duquel l'élément porteur (60) du système de transport est disjoint de l'élément de transport (50) du système de transport et remplacé par un autre élément porteur (60).
